# EUROPEAN PATENT APPLICATION

(11) **EP 1 160 567 A2**
(43) Date of publication of application: **05.12.2001**
(21) Application number: 01660066.0
(22) Date of filing: 11.04.2001
(51) Int. Cl.: G01N 25/30

(54) **Sensor and method for measuring gas concentrations**

(30) Priority: 17.04.2000 FI 20000917
(71) Applicant: VALTION TEKNILLINEN TUTKIMUSKESKUS, 02150 Espoo 15 (FI)
(72) Inventor: Blomberg, Martti, 01600 Vantaa (FI); Lehto, Ari, 00700 Helsinki (FI); Saarilahti, Jaakko, 00200 Helsinki (FI)
(74) Representative: Lipsanen, Jari Seppo Einari

(57) **Abstract**

The invention concerns a method and a sensor for measuring gas concentrations. The sensor according to the invention comprises an element (A1, 5) which is sensitive to a chemical reaction of the gas being measured and means for measuring (13) the temperature of the element (A1, 5) sensitive to a chemical reaction of the gas being measured. According to the invention, the temperature-measuring means (TP1, TP2) are constituted by several series-connected thermopairs (13).

## Description

The invention relates to a sensor according to Claim 1 for measuring the concentration of gases.

The invention also relates to a method according to Claim 11 for measuring the concentration of gases.

When analyzing flammable gases, sensors of sufficient sensitivity and capable of responding with adequate swiftness to changes in the concentrations of the gases being measured are needed. Often even a compact size and low production costs are required of the sensor. A common approach in the design of micromechanical sensors has been to miniaturize existing methods, e.g. by manufacturing a pellistor implemented by silico-micromechanical techniques. In the present invention, a different approach has been applied by designing a novel type of sensor whose structure can be generalized to measure various kinds of endothermic or exothermic processes.

Prior-art pellistors used for analyzing flammable gases most commonly have a spiralled platinum wire covered with a catalytic material. Electric current run through the platinum wire is used to heat the catalytic material of the pellistor. The platinum wire, which has a positive temperature coefficient, can simultaneously be exploited as a thermometric resistor. The combustion reaction induced on the surface of the catalyst then gives rise to a change in the resistance of the platinum wire, which can be measured via heating electrodes.

Reference [1] describes a pellistor implemented by silico-micromechanical techniques and having an active area of no more than 20*360 square micrometers.

The greatest drawback relating to pellistors is their slow function and insensitivity as well as the high cost of the electronics required to perform the measurements. Pellistors are also unsatisfactory in battery operation due to the high power consumption required by heating.

It is an aim of the present invention to eliminate the drawbacks hampering the prior art and to provide an entirely novel type of sensor and method for measuring gas concentrations.

The invention is based on measuring gas concentrations by means of thermojunctions produced by micromechanical techniques.

In more detail the sensor according to the invention is characterized by what is stated in the characterizing part of Claim 1.

The method according to the invention is characterized by what is stated in the characterizing part of Claim 11.

The invention offers considerable benefits.

The output signal of the sensor according to the invention is a voltage, whereby the component to be measured need not be biased, which provides a good basis for a cheap implementation of the measuring electronics required.

The compact size and the small power required by the micromechanical component are also of significant advantage. Due to the small thermal mass to be heated, the sensor construction of the invention is potentially also swift in comparison with conventional pellistors.

The sensor according to the invention may be used for measuring the concentrations of different kinds of gases including humidity measurements and also as a calorimeter used for studying minuscule amounts of substances.

In the following, the invention is examined by means of a working example/s and with reference to the annexed drawing/s.

Figure 1 is a sectional side view of a sensor according to the invention. The section is performed along the line A-A of Figure 2.

Figure 2 is a top view of the sensor construction of Figure 1.

Figure 3 is a schematic top view of a sensor construction according to the invention for measuring the concentrations of several gases.

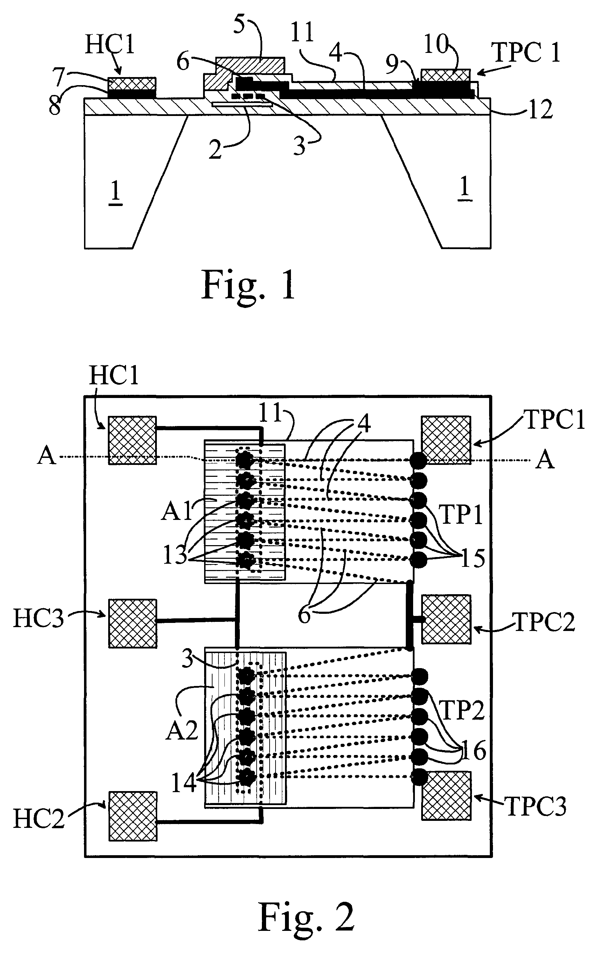

The invention is based on a sensor which is used to measure the amount of heat released or bound by a chemical or physical process. The measurement performed by means of the sensor is of calorimetric nature. The principle of the sensor structure is depicted in Figures 1 and 2. Typically, the sensor is a monolithic construction, i.e. a construction integrated onto one and the same substrate, typically a silicon chip. The sensor consists of two separate, essentially planar areas A1 and A2. The areas are thermally insulated from their environment as carefully as possible to minimize the conduction of heat to the rest of the sensor structure. To obtain good thermal insulation, the substrate silicon 1 has been removed from beneath the areas A1 and A2 by etching. The supporting structure comprises a thin layer 12 of silicon nitride. The area A1 of the sensor is coated with a material which responds to the process being measured by releasing or binding heat. The area A2 of the sensor is coated with a reference coating material. The temperature of the areas A1 and A2 can be regulated by means of a heating resistor 3 integrated into the structure. The heating resistors 3 may also be used for temperature measurements. In accordance with Figure 1, it is possible to fit an embedded metal membrane 2 under the heating resistors which promotes uniform heat distribution. The sensitivity of the sensor to the process measured depends on the temperature of the areas A1 and A2.

The difference in temperature between the areas A1 and A2 caused by the process being measured is measured by means of the thermopiles TP1 and TP2, whereby the temperature difference between the cold 13 and the hot junction 14 gives rise to a so called thermovoltage. The temperature difference formed is minute, typically only 10⁻³ K (1 mK). The magnitude of the thermovoltage generated per thermojunction is in typical use only measurable in microvolts. The element formed by the thermojunction will henceforth be termed a thermopair. Thus the temperature difference between the areas A1 and A2 is typically measured by such thermopiles TP1 and TP2 that consist of about a hundred thermopairs, whereby the signal produced by the thermopairs is obtained as a summation thermovoltage generated by series-connected thermopairs. The number of thermopairs consisting of thermopair materials 4 and 6 in the thermopiles TP1 and TP2 has been reduced due to restrictions imposed by the manner of illustration. The thermopiles TP1 (area A1) and TP2 (area A2) consisting of thermopairs are connected such that they have opposite polarities. This emerges from the Figures in that TP1 and TP2 are each other's mirror images. If the areas are constructed similar seen as in Figure 2 and the connection therebetween is omitted, the connection of Figure 2 (opposite polarity) can be implemented by means of an external connection. Due to the connection of Figure 2, the voltage provided by the sensor is zero when no temperature difference prevails between the areas A1 and A2. In the presence of the endo- or exothermic process on the surface of area A1, a difference in temperature is created between the areas A1 and A2 of the sensor, which results in the generation of a voltage between the poles TCP 1 and TCP3 proportional to the temperature difference between the areas A1 and A2. The contact TCP2 can be used for supervisory measurements, e.g. when measuring the temperature difference between the areas A1 and A2 with regard to the substrate.

The thermopairs used in the sensor are processed onto a silicon substrate 1. In the present embodiment, the thermopair materials of the structure have been selected to comprise molybdenum and n-type polycrystalline silicon which e.g. in Figure 1 are visible as the contact area between the thermopair materials of one thermopair. Thus, one thermopair (reference numeral 13 in Figure 2) is visible in Figure 1 as the contact area of the material layers 4 and 6, where reference numerals 6 and 4 represent molybdenum and n-type polycrystalline silicon, respectively. The thermopairs 13 are situated in the middle of the component on top of a silicon nitride layer 12. In accordance with Figure 2, the thermopair materials 4 and 6 serve as conductors between the thermopairs 13 and 15. The conductors 4 and 6 are further coated with a silicon nitride layer 11. The silicon wafer 1 is etched such that it is open at the location of the thermopairs 13 down to the silicon nitride membrane 12, resulting in a small thermal mass and heat conductivity from the areas A1 and A2 to the silicon substrate 1. The geometric construction of the sensor is optimized such that the thermal insulation of the areas A1 and A2 is of maximal uniformity for both areas A1 and A2. The thermopairs 15 and 16 measuring the temperature of the substrate 1 are located in an area of good thermal contact to the silicon substrate 1.

When the sensor is used as a flammable gas sensor, the area A1 is coated with a catalyst (platinum, gold, palladium, or some chemical compound) which is represented by reference numeral 5 in Figure 1. Correspondingly, the area A2 of the sensor is coated with a reference coating layer which does not respond to the gas being measured. When the areas A1 are heated to a temperature of about 150 °C by means of the heating resistor 3, the gas begins to oxidize on the surface of the area A1 due to the catalytic coating 5, whereby a difference in temperature is created between the areas A1 and A2 which is proportional to the concentration of the flammable gas in the immediate vicinity of the sensor. The temperature difference is measured as a voltage signal over the contacts TPC1 and TPC3. Generally speaking the areas A1 and A2 may be covered with materials catalytic in the case of different kinds of gases, whereby the sensor essentially measures the relations between the partial pressures of two or several gases.

The heating current of the component is connected between the contacts HC1 and HC2. The contact HC3 may be used for measurement purposes or for distributing the heating current in a different way between the areas A1 and A2, should the structures in the vicinity of the areas A1 and A2 not be fully identical e.g. due to reasons related to processing techniques. For example the heating contacts HC1 - HC3 are formed by a metal layer 8 which is constituted either by molybdenum or tungsten. A layer 7 of gold or aluminium is typically formed on top of this layer. In a corresponding manner, the measurement contacts TPC 1 to TPC3 are formed by a metal layer 9 (molybdenum or aluminium) and a contact layer 10 (gold or aluminium).

The sensor has the following typical dimensions:
The surface areas of the areas A1 and A2 are typically in the range from 100 to 1,000,000 square micrometers. Each area A1 and A2 typically has about 20 to 100 thermopairs, whereby the distance between the thermopair 13 center points typically is in the range of a few dozen micrometers. The thickness of the areas A1 and A2 typically varies from 500 nanometers to 10 micrometers.

The sensor can even be used for measuring a physical phenomenon, whereby latent heat can be measured e.g. in conjunction with dampness condensation or evaporation as a humidity-sensing element, if the area A1 is coated with a humidity-absorbing porous material, such as a porous oxide. The area A2 of the sensor is then coated with a humidity-repellent reference coating. When humidity binds to the porous area or when the porous area dries, a temperature difference is created between the areas A1 and A2 which can be seen as a voltage signal in the sensor output, in other words between the contacts TCP1 and TCP3. The temperature difference (signal) between the areas A1 and A2 can be increased by pulsing the temperature of the areas. During the heating of the areas A1 and A2 the surface A1 is dried, whereby the temperature difference between the areas A1 and A2 is negative (endothermic process). Correspondingly, during cooling humidity is bound to the surface of the area A1 which leads to a more elevated temperature at surface A1 than at surface A2 (exothermic process). Thus, as a result of the pulsing of the temperatures of the areas A1 and A2, a signal proportional to the humidity of the gas in the vicinity of surface A1 is generated in the sensor output.

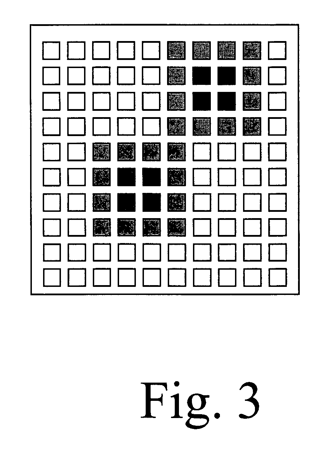

The structure can be generalized in accordance with Figure 3 by coating the areas A1, A2 ... An with materials whose surfaces or inner parts are the sites of endothermic or exothermic reactions creating temperature differences between the various areas. The differences in temperature between the areas are dependent on the concentrations of the substances studied in the coating materials or in the immediate vicinity thereof. The measurement can be performed at several different temperatures. Thus, Figure 3 represents a sensor matrix for identifying the "pattern" of a gas. If the sensor elements are at different temperatures, a given gas generates the response distribution seen in the Figure, and another gas provides a different distribution. If, in addition, different catalysts are used, a more specific sorting of the "pictures" of different gases is obtained. A mixture of gases for its parts creates a special pattern of its own.

This image matrix is then connected to a neural network and it is taught to identify various patterns by means of (calibration) gases which it is its future task to identify.

The sensors of the invention may be produced by various micromechanical techniques, of which silicomicromechanics is mentioned herein as a preferred alternative. The substrate may also comprise e.g. glass.

In the above-described solutions, the silicon nitride may be replaced by e.g. oxynitride.

The sensor matrix of Figure 3 may also adapt to the measuring situation by maximizing its sensitivity by trying out different temperatures. The concentrations of gases do not vary very rapidly, wherefore it is possible for the sensor matrix to perform several adaptations per second. Furthermore, the sensor is often arranged inside a filter of some kind, which further slows down the change in concentration. This may prove of advantage if the composition of the gas mixture being measured changes in an unforeseen way. Hereby the adaptation brings out a new, unknown pattern. Naturally the matrix can be configured to measure predetermined "patterns" in a programmed way (measuring gas pattern A for a short while, then pattern B, etc.).

When flammable gases are measured, water is formed that leaves the catalyst surface in a manner which is dependent on humidity. Therefore it is of advantage to measure humidity in order to be able to compensate its influence on the effective surface of the catalyst. This is why according to a preferred embodiment of the invention both the above-described elements which measure gas/gases as well as humidity-measuring elements/areas may be arranged on one and the same monolithic substrate.

Cited references:
[1] Cs Dücsö et Al: Inherently explosion-proof micropellistor by single-side Si bulk-micromachining; Proceedings of EUROSENSORS XIII, 1999, p. 469-470.

## Claims

1. A sensor for measuring gas concentrations, comprising
- an element (A1, 5) sensitive to a physical or chemical reaction of the gas being measured, and
- means for measuring (13) the temperature of the element (Al, 5) sensitive to a chemical reaction of the gas,
**characterized in that**
- the temperature-measuring elements (TP1, TP2) are formed of several series-connected thermopairs (13).

2. The sensor for measuring gas concentrations of Claim 1, **characterized in that** it is a monolithic structure and is produced by micromechanical techniques.

3. The sensor of Claim 1 or 2, **characterized in that** the sensor comprises a reference element (A2) whose temperature is not dependent on the concentration of the same gas as that of the measuring element (A1).

4. The sensor of any one of the Claims 1, 2 or 3, **characterized in that** the sensor includes a temperature-equalizing layer (2) in the vicinity of the element (A1) which is sensitive to the gas being measured, the reference element (A2), or both.

5. The sensor of any one of the previous Claims, **characterized in that** the sensor comprises heating means (3) for heating at least the area (A1) which is sensitive to the concentration of the gas being measured.

6. The sensor of any one of the previous Claims, **characterized in that** the thermopairs (13) are formed of a pair with one pole (6) of molybdenum or aluminium and the other pole (4) of polycrystalline silicon.

7. The sensor of any one of the previous Claims, **characterized in that** the thermopairs (14) of the thermojunctions (13) of the measuring element (A1) of the sensor and those of the reference element (A2) are connected either inside the circuit or by means of an external connection to have opposite polarities and their number is identical, whereby at zero concentration of the gas being measured the measurement voltage is zero.

8. The sensor of any one of the previous Claims, **characterized in that** the sensor element (A1) which is sensitive to the gas being measured comprises a humidity-absorbing porous area for measuring relative humidity.

9. The sensor of any one of the previous Claims, **characterized in that** the sensor comprises several different elements sensitive to the gas being measured and corresponding temperature-measuring means specific for each area..

10. The sensor of any one of the previous Claims, **characterized in that** the sensor comprises both means for measuring humidity and a measuring element (A1) sensitive to at least one measured gas.

11. A method for measuring gas concentrations, wherein the gas concentration is measured by the aid of a temperature change induced by a physical or chemical reaction caused by the gas,
**characterized by**
- measuring the temperature change by means of several series-connected thermopairs (13).

12. The method of Claim 11 for measuring gas concentrations, **characterized by** determining the temperature change on the basis of the temperature difference between the measurement area (A1) and the reference area (A2).

13. The method of Claim 11 or 12 for measuring gas concentrations, **characterized by** heating the measurement area (A1) to heat the measured gas in order to intensify the chemical reaction and thus to bring the measurement into a more sensitive range.

14. The method of Claim 11, 12 or 13 for measuring gas concentrations, **characterized by** varying the temperature of the sensor matrix to adapt it to the measurement situation such that it finds its maximal sensitivity by varying the temperature.

15. The method of any one of the previous Claims, **characterized by** measuring both humidity and the concentration of at least one other gas by means of sensors on one and the same monolithic substrate.
